# EUROPEAN PATENT APPLICATION

(11) **EP 4 456 519 A1**
(43) Date of publication of application: **30.10.2024**
(21) Application number: 22910920.2
(22) Date of filing: 08.12.2022
(51) Int. Cl.: H04M 11/00

(54) **POSITION SEARCH SYSTEM AND POSITION SEARCH METHOD**

(30) Priority: 20.12.2021 JP 2021206545
(71) Applicant: NTT Communications Corporation, Tokyo 100-8019 (JP)
(72) Inventor: AOKI, Fumio, Tokyo 100-8019 (JP)
(74) Representative: Hoffmann Eitle
(86) International application number: PCT/JP2022/045258
(87) International publication number: WO 2023/120209

(57) **Abstract**

A position search system (1) includes a communication terminal (30) that receives a tag signal sent by a tag (10), and the communication terminal (30) includes a detecting unit configured to perform a detection process of detecting a position of the communication terminal (30) when a possessor of the communication terminal (30) is going out, a receiving unit configured to perform a reception process of receiving the tag signal sent from the tag (10), a notifying unit configured to perform a notification process of notifying a server (40) of both a tag ID included in the tag signal received from the tag (10) and the positional information on the communication terminal (30) obtained when the tag signal is received, and a control unit configured to allow the receiving unit to start the reception process and allow the notifying unit to start the notification process when the detection process is started by the detecting unit, and allow the receiving unit to start the reception process and allow the notifying unit to end the notification process when the detection process is ended by the detecting unit.

## Description

### [Technical Field]

The present invention relates to a position search system and a position search method.

### [Background Art]

In recent years, as a way to estimate positions of pets, children, elderly persons, and valuables, a position search system for estimating a position of a pet by utilizing a tag that sends a signal by using a technology conforming to the Bluetooth (registered trademark) standards or the like.

For example, with this position search system, the tag that outputs a signal conforming to the Bluetooth standards is attached to a child or a pet. Then, with this position search system, a communication terminal, such as a smartphone, carried by a third person who is another person of a guardian of the child or a pet owner of the pet is utilized as a sensor that receives the signal sent from the tag. Specifically, with this position search system, the communication terminal carried by the third person who is located nearby and who has received the signal sent from the tag that has been attached to the child or the pet provides a position of the child or the pet that became lost to the guardian of the child or the pet owner of the pet by notifying a server of positional information on a position in which the signal sent from the tag is received.

In a case of the position search system described above, the tag side only needs a communication function conforming to the Bluetooth (and Bluetooth Low Energy that is one of types of Bluetooth) standards having a power saving function that consumes less power than a mobile communication network, and thus, there is no need to mount a large capacity battery. As a result of this, it is possible to use a small tag for a long time, it is thus possible to easily allow the child to carry the tag or easily attach the tag to the pet, and, in addition, charging of the tag is not needed frequently.

### [Citation List]

### [Patent Citation]

Patent Literature 1: Japanese Laid-open Patent Publication No. 2011-250171

### [Summary of Invention]

### [Technical Problem]

In this way, with the above described position search system, regarding positional information management of the tags using a communication standard, such as Bluetooth, it is possible to implement both of a reduction in size of the communication terminal and the use of the communication terminal for a long time, so that it is very convenient, and the use of the tag is becoming more widely used for the purpose of grasping the positional information in the case where a child or a pet becomes missing outside.

Here, with the above described position search system, at the time of missing, it is not possible to grasp the positional information unless a sensor (communication terminal) that transmits the positional information on the tag is located in the vicinity of the tag. As a result of this, conventionally, a method of arranging the communication terminals that transmit the positional information across a town by a budget provided by a local government or the like, a method of asking citizens for cooperation as volunteers by installing and activating a dedicated smartphone application, and the like are used.

Among the methods described above, in the case where the communication terminals that transmit the positional information are arranged in the town by a budget provided by the local government or the like, there is a problem in that an installation cost and a maintenance cost of the communication terminals are needed.

Furthermore, in the case where the dedicated position search application is installed in each of the communication terminals used by the citizens (search collaborators) who work as volunteers and the application is activated, the load exerted on the local government is reduced but another problem occurs.

If the position search application is activated, the communication terminals that are used by the citizens need to acquire global positioning system (GPS) information. If a GPS function is operated, power consumption is large, and thus an electric current consumed in mobile terminal becomes large, so that there is a problem in that battery consumption is fast. As a result of this, it is difficult to ask the citizens who are working as volunteers to always activate the application, and, as a result of this, in some cases, it is not possible to receive cooperation of volunteers.

Accordingly, in order to reduce the consumption of the battery for the communication terminals, it is conceivable to ask the citizens to activate the dedicated application only when the citizens are out and walking outside and ask the citizens to end the dedicated application when the citizens return home. When the citizens go out of doors, citizens are usually moving, so that a probability that each of the communication terminal picks up the signal sent from the tag is increased. As a result of this, it is possible to expect the possibility that the communication terminals carried by the citizens receive the signal sent from the tag that is present outside.

However, the operation related to a process of activating the dedicated application only when the citizens go out of doors and a process of ending the application when the citizens return home are complicated for the citizens who work as volunteers. As a result of this, the volunteer citizens often forget to perform the activation or end operation of the application, so that the method of asking the citizens to activate the dedicated application only when the citizens are out and walking outside did not spread easily.

Accordingly, the present invention has been conceived in light of the circumstances described above and an object thereof is to provide a position search system and a position search method capable of improving a probability of finding a tag by increasing the number of communication terminals in a town used for finding the tag while reducing the processing load exerted on search collaborators.

### [Solution to Problem]

In order to solve the above-described problems and achieve the object, a position search system according to the present invention is position search system including: a tag that sends a tag signal including identification information; a first communication terminal that receives the tag signal; a server that collects pieces of information from the first communication terminal that has received the tag signal; and a second communication terminal that acquires positional information on the tag transmitted from the server, wherein the first communication terminal includes a detecting unit configured to perform a detection process of detecting a position of the first communication terminal when a possessor of the first communication terminal goes out of doors, a receiving unit configured to perform a reception process of receiving the tag signal that has been sent from the tag, a notifying unit configured to perform a notification process of notifying the server of both identification information on the tag included in the tag signal received from the tag and positional information on the first communication terminal obtained when the tag signal has been received, and a control unit configured to allow the receiving unit to start the reception process and allow the notifying unit to start the notification process when the detection process performed by the detecting unit is started, and allow the receiving unit to end the reception process and allow the notifying unit to end the notification process when the detection process performed by the detecting unit is ended, and the server includes a collecting unit configured to collect the identification information on the tag and the positional information on the tag from the first communication terminal, a specifying unit configured to specify a position of the tag by using the positional information collected by the collecting unit, and an output unit configured to output information related to the position of the tag specified by the specifying unit.

### [Advantageous Effects of Invention]

According to the present invention, it is possible to improve a probability of finding a tag by increasing the number of communication terminals in a town used for finding the tag while reducing the processing load exerted on search collaborators.

### [Brief Description of Drawings]

FIG. 1 is a schematic diagram illustrating the overall configuration of a position search system according to a first embodiment.
FIG. 2 is a block diagram illustrating a configuration example of a tag according to the first embodiment.
FIG. 3 is a block diagram illustrating a configuration example of a communication terminal according to the first embodiment.
FIG. 4 is a block diagram illustrating a configuration example of a communication terminal according to the first embodiment.
FIG. 5 is a block diagram illustrating a configuration example of a server according to the first embodiment.
FIG. 6 is a diagram illustrating one example of a table stored by a positional information storage unit.
FIG. 7 is a diagram illustrating one example of a screen displayed on the communication terminal.
FIG. 8 is a diagram illustrating a target object to which a tag is attached.
FIG. 9 is a diagram illustrating an application example of the position search system.
FIG. 10 is a sequence diagram illustrating a processing procedure of the position search process according to the first embodiment.
FIG. 11 is a sequence diagram illustrating a processing procedure of a position search process according to a first modification of the first embodiment.
FIG. 12 is a block diagram illustrating a configuration example of a communication terminal according to a second embodiment.
FIG. 13 is a sequence diagram illustrating a processing procedure of a position search process according to the second embodiment.
FIG. 14 is a diagram illustrating a computer that executes a position search program.

### [Embodiments for Carrying Out the Invention]

Preferred embodiments of a position search system and a position search method disclosed in the present invention will be described in detail below with reference to the accompanying drawings. In addition, the position search system and the position search method according to the present application are not limited by the embodiments.

### First Embodiment

First, a first embodiment will be described. In recent years, a position recording application for recording positional information on a communication terminal when one goes out of doors by using a global positioning system (GPS) function of the communication terminal is provided. Specifically, examples of the application include an application for recording a route of their walking, running, riding a bicycle, or the like, of a possessor of the communication terminal, an application for recording a walking route of a pet, and a position recording application having a function of car navigation.

These position recording applications do not usually acquire the positional information based on the GPS even when the applications are being activated. In addition, when a possessor goes out of doors and starts an activity, as a result of the possessor operating a start button or the like of the position recording application, the position recording application activates the GPS of the communication terminal and records the measured positional information. When the position record is to be ended, as a result of the possessor operating an end button or the like of the position recording application, the position recording application ends the function of measuring the position.

A position search system 1 according to the first embodiment allows these position recording applications to be linked with the position search application that is provided by the position search system 1.

First, in the position search system according to the first embodiment, a function of notifying, via a network, a server of the position search system of both identification information (ID) of a tag (tag ID) included in a signal when the signal sent from the tag is received and the positional information on the own communication terminal is given to the position recording application installed in the communication terminal carried by the possessor.

Then, in the first embodiment, in the case where the position recording application starts measurement of the positional information, the communication terminal that functions as a sensor in a town also operates the function of notifying the server of both the ID information sent from the tag and the positional information on the own communication terminal. Namely, in the case where the possessor (search collaborator) of the communication terminal operates a start button or the like of the position recording application when the possessor goes out of doors, the communication terminal automatically starts a tag ID reception process of receiving the tag ID and a notification process of notifying of both the tag ID and the positional information performed by the position search application.

Then, in the embodiment, in the case where the position recording application ends the measurement of the positional information, the communication terminal functioning as a sensor in the town also ends the function of notifying both the ID information sent from the tag and the positional information on a mobile terminal corresponding to the terminal. In the case where the possessor (search collaborator) of this communication terminal operates the end button or the like of the position recording application when the possessor finished going out, the communication terminal automatically ends the tag ID reception process of receiving the tag ID and the notification process of notifying of both the tag ID and the positional information performed by the position search application.

### Configuration of position search system 1

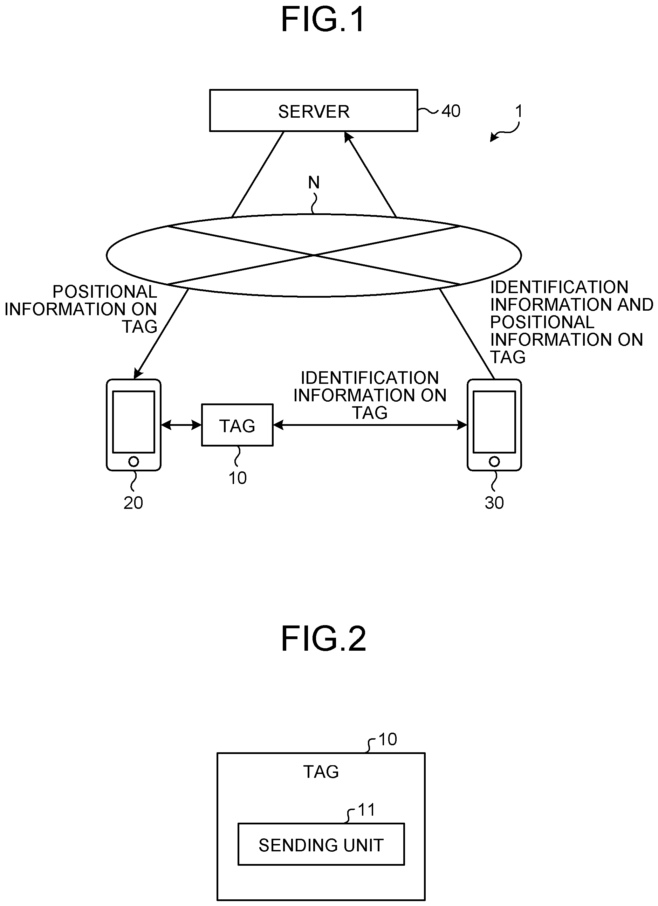

FIG. 1 is a schematic diagram illustrating the overall configuration of the position search system according to the first embodiment. The position search system 1 according to the first embodiment includes a tag 10 that sends a signal including the identification information (for example, an ID), communication terminals 20 and 30 each of which receives the signal sent from the tag 10, and a server 40 that collects information from each of the communication terminals 30.

The plurality of communication terminals 20 and 30 and the server 40 are connected with each other via a communication network N, and are able to perform data communication with another device. Furthermore, the configuration illustrated in FIG. 1 is one example, and a specific configuration and the number of devices are not particularly limited. Moreover, the number of communication terminals 30 illustrated in FIG. 1 is one example.

The tag 10 is a terminal that sends a radio signal including an ID of the tag 10 (hereinafter, referred to as a tag ID) by using a method conforming to, for example, the Bluetooth standards, or the like. For example, the tag 10 moves in accordance with a movement of a detection target, such as a pet, a child, an elderly person, or a specific object (for example, a bicycle, a valuable, items, etc.), and, for example, periodically sends a signal. In the first embodiment, for example, as a result of the tag 10 being attached to the pet, the tag 10 moves together with the detection target.

The communication terminal 20 (a second communication terminal) is a communication terminal that is possessed by a user (for example, a pet owner of a pet, a guardian of a child, an owner of a specific object attached to the tag 10, etc.) who manages the tag 10. The communication terminal 20 is, for example, a communication terminal, such as a smartphone, a tablet, or mobile phone. The communication terminal 20 is a communication terminal that acquires positional information on the tag 10 sent from the server 40. The communication terminal 20 may acquire a signal sent from the tag 10, in addition to acquiring the positional information on the tag 10 sent from the server 40. Furthermore, the communication terminal 20 may be paired with the tag 10.

The communication terminal 30 (a first communication terminal) is a terminal that is possessed by, for example, a search collaborator, such as a volunteer served in a town. Furthermore, this sort of the communication terminal 30 may be possessed by a shipping company that provides a delivery service to various locations. Moreover, a position search application for searching for, for example, a position of the tag 10 has already been downloaded into the communication terminal 30, and a process of receiving and searching for the position of the tag 10 is performed under the control of the position search application.

The position recording application has already been downloaded into the communication terminal 30. In the communication terminal 30, a position detection process performed by using a position detection function (for example, a GPS function) of the communication terminal 30 and a process of recording and the positional information that has been detected in the position detection process are performed under the control of the position search application. As described above, the position recording application records, on the basis of the positional information that has periodically been detected by the GPS function, a movement route of the communication terminal 30 as a walking route or a running route of the possessor of the communication terminal 30. The position recording application also has a function of the position search application for notifying, in the case where a signal sent from the tag 10 is received, the server 40 of both the tag ID included in the signal and the positional information on the own communication terminal 30 via the network N.

The communication terminal 30 allows the position recording application to be linked with the position search application, and automatically activates the function of the position search application by operating only the position recording application performed by the possessor when the possessor of the communication terminal 30 goes out of doors. When the position recording application starts measurement of the positional information, the communication terminal 30 also operates the function of notifying the server 40 of both the ID information sent from the tag and the positional information on the own communication terminal. When the position recording application ends the measurement of the positional information, the communication terminal 30 also ends the function of notifying the server 40 of both the ID information sent from the tag and the positional information on the mobile terminal corresponding to the communication terminal 30.

The server 40 collects the positional information from the plurality of communication terminals 30 each of which has received the signal sent from the tag 10, specifies the position of the tag 10 by using the collected pieces of positional information, and outputs the information related to the specified position of the tag 10. The server 40 may also collect the positional information or the like from the communication terminal 20, in addition to the communication terminal 30.

In the case where a missing case of a pet, a child, or the like to which the tag 10 is attached has occurred, in addition to the communication terminal 20, the communication terminal 30 possessed by the search collaborator, such as a volunteer, who is going out of doors serves a function of a sensor that receives the signal sent from the tag 10, so that the search range of the tag 10 is increased.

For example, the communication terminal 30 receives the signal sent from the tag 10 that is attached to the missing pet or child, and notifies the server 40 of both the tag ID of the tag 10 and the positional information that is related to the communication terminal 30 and that is obtained at the time of reception of the signal, so that the server 40 is able to specify the positional information on the tag 10. The server 40 notifies the communication terminal 20 that is possessed by, for example, the pet owner of the pet, the guardian of the child, or the like of the specified positional information on the tag 10.

### Configuration of tag 10

In the following, a configuration of the tag 10 will be described with reference to FIG. 2. FIG. 2 is a block diagram illustrating a configuration example of the tag 10 according to the first embodiment. The tag 10 includes an electronic circuit, and an internal memory that stores therein control data and programs in which various kinds of procedures are prescribed. Furthermore, the tag 10 performs various kinds of processes by various kinds of programs being operated. As illustrated in FIG. 2, the tag 10 includes a sending unit 11 that sends a signal including the tag ID.

Furthermore, in the case where the tag 10 sensors a movement of the tag 10 by itself, the tag 10 may send, together with the ID that indicates the type of the signal, the signal that is set such that at least one of a transmission output and a transmission frequency has been increased in accordance with the movement distance of the tag 10 as compared to a signal to be sent at a standard mode.

### Configuration of communication terminal 20

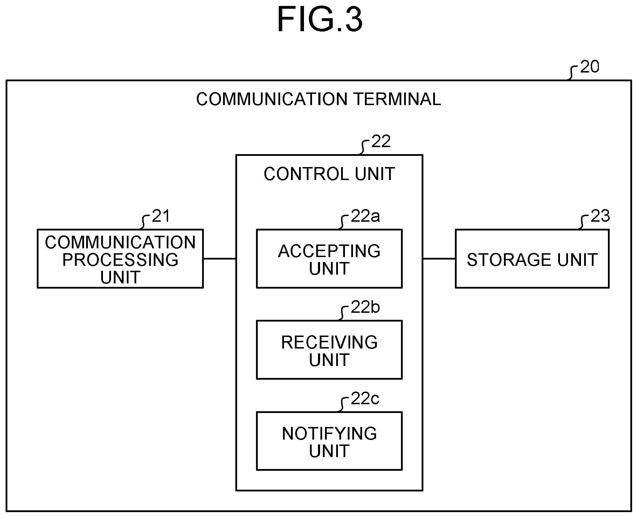

In the following, a configuration of the communication terminal 20 will be described with reference to FIG. 3. FIG. 3 is a block diagram illustrating a configuration example of the communication terminal according to the first embodiment. As illustrated in FIG. 3, the communication terminal 20 includes a communication processing unit 21, a control unit 22, and a storage unit 23. In the following a process performed by each of the units included in the communication terminal 20 will be described. Furthermore, the configuration illustrated in FIG. 3 corresponds to a case in which the communication terminal 20 includes a function of receiving the signal sent from the tag 10.

The communication processing unit 21 controls communication related to various kinds of information. For example, the communication processing unit 21 performs wireless communication, and receives a signal that has been sent from the tag 10.

The storage unit 23 stores therein data and programs that are needed for various kinds of processes performed by the control unit 22. For example, the storage unit 23 is a semiconductor memory device, such as a random access memory (RAM) or a flash memory, or a storage device, such as a hard disk or an optical disk.

The control unit 22 includes an internal memory that stores therein needed data and programs in which various kinds of processing procedures are prescribed, whereby the control unit 22 executes various kinds of processes, and includes, in particular, as closely related to the present invention, an accepting unit 22a, a receiving unit 22b, and a notifying unit 22c. Here, the control unit 22 is an electronic circuit, such as a central processing unit (CPU) or a micro processing unit (MPU), or an integrated circuit, such as an application specific integrated circuit (ASIC) or a field programmable gate array (FPGA).

The accepting unit 22a receives a request for activation of an application for searching for a position of the tag 10 (hereinafter, referred to as a position search application). The position search application may be activated by a user who has checked the activation request, or may be automatically activated in accordance with the activation request made by the server 40. The position search application may be always activated. Furthermore, the accepting unit 22a may also receive a tag ID that is used to identify the tag 10 corresponding to the search target together with the request for the activation of the position search application.

The receiving unit 22b receives the signal sent from the tag 10 in the case where the position search application has been activated. For example, when the position search application is activated, the receiving unit 22b starts a process of receiving the signal sent from the tag 10, and, when the receiving unit 22b receives the signal from the tag 10 as a result of the distance between the tag 10 and the communication terminal 20 being decreased, the receiving unit 22b notifies the notifying unit 22c of the reception of the signal.

Furthermore, in the case where the accepting unit 22a continuously receives the tag ID of the search target, the receiving unit 22b may determine whether the tag ID that is included in the received signal agrees with the tag ID of the search target, and may notify the notifying unit 22c of the reception of the signal only when both of the tags ID agree with each other.

In the case where the ID that indicates, for example, the type of the signal is included in the signal sent from the tag 10, that is, included in the received signal, the receiving unit 22b may determine the type of the signal on the basis of the ID. Furthermore, the receiving unit 22b may determine, as a method of determining the type of the received signal, the type of the signal on the basis of, for example, the number of signals that have been received from the same tag 10 within a certain period of time.

In the case where the signal has been received by the receiving unit 22b, the notifying unit 22c notifies the server 40 of the positional information on the own communication terminal 20 obtained at the time of reception of the signal. For example, in the case where the signal has been received by the receiving unit 22b, the notifying unit 22c notifies the server 40 of the positional information on the own communication terminal 20 together with the tag ID of the tag 10 that is included in the received signal. Furthermore, the notifying unit 22c may estimate the distance between the tag 10 and the own device in accordance with the type of the signal that has been received by the receiving unit 22b, and may notify the server 40 of the information related to the position of the tag 10. Moreover, the positional information may be information that indicates the coordinates (latitude and longitude) of the own communication terminal 20 that is identified by using, for example, a global positioning system (GPS), or may be information that indicates a rough area that is identified by a base station connected by the own communication terminal 20.

### Configuration of communication terminal 30

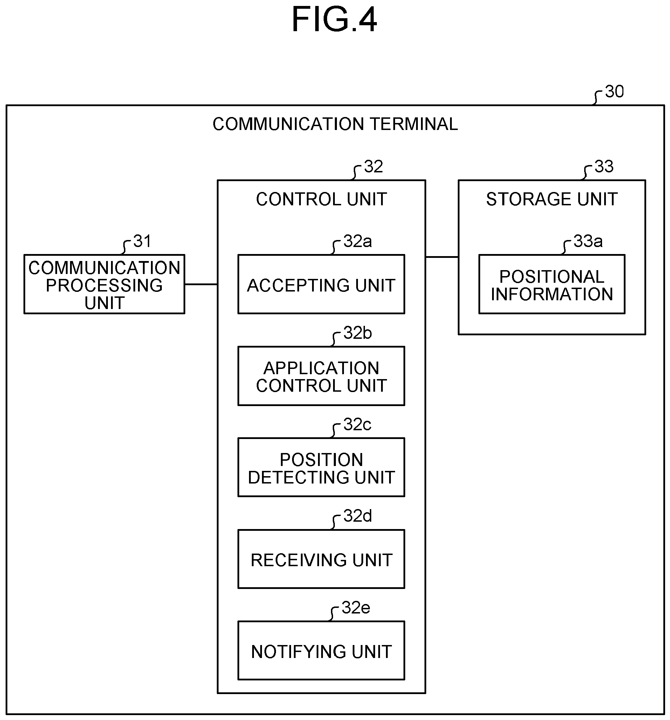

In the following, a configuration of the communication terminal 30 will be described with reference to FIG. 4. FIG. 4 is a block diagram illustrating the configuration example of the communication terminal 30 according to the first embodiment. As illustrated in FIG. 4, the communication terminal 30 includes a communication processing unit 31, a control unit 32, and a storage unit 33. In the following, a process performed by each of the units included in the communication terminal 30 will be described.

The communication processing unit 31 controls communication related to various kinds of information. For example, the communication processing unit 31 performs wireless communication, and receives a signal that has been sent from the tag 10.

The storage unit 33 stores therein data and programs that are needed for various kinds of processes performed by the control unit 32. For example, the storage unit 33 is a semiconductor memory device, such as a RAM or a flash memory, or a storage device, such as a hard disk or an optical disk, or the like. The storage unit 33 stores therein positional information 33a on the communication terminal 30 detected by a position detecting unit 32c.

The control unit 32 includes an internal memory that stores therein needed data and programs in which various kinds of processing procedures are prescribed, whereby the control unit 22 executes various kinds of processes. The control unit 32 includes an accepting unit 32a (control unit), an application control unit 32b, the position detecting unit 32c (detecting unit), a receiving unit 32d, and a notifying unit 32e. Here, the control unit 32 is an electronic circuit, such as a CPU or an MPU, or an integrated circuit, such as an ASIC or a FPGA.

The accepting unit 32a accepts an input of an instruction to start the position recording application and an input of an instruction to end the position recording application. The accepting unit 32a accepts an input of first instruction information that instructs the position recording application to start recording of the positional information as instructed by the possessor of the communication terminal 30 and an input of second instruction information that instruct the position recording application to end the recording of the positional information as instructed by the possessor of the communication terminal 30. The accepting unit 32a receives an input of the first instruction information and the second instruction information by way of a wearable device worn by the possessor of the communication terminal 30.

The application control unit 32b controls a position detection operation of the communication terminal 30 and a recording operation of the detected position of the communication terminal 30 performed by the position recording application that has been downloaded into the communication terminal 30. The application control unit 32b also controls the operation of the position search application that is given to the position recording application for notifying the server 40 of both the positional information on the tag ID and the own communication terminal 30.

The application control unit 32b allows the receiving unit 32d to start the reception process and allows the notifying unit 32e to start the notification process when the detection process performed by the position detecting unit 32c is started. The application control unit 32b allows the receiving unit 32d to end the reception process and allows the notifying unit 32e to end the notification process when the detection process performed by the position detecting unit 32c is ended.

In the following, a case in which the accepting unit 32a has received an input of the first instruction information will be specifically described. In this case, the application control unit 32b allows the position detecting unit 32c to start the detection process of detecting the position of the communication terminal 30. In addition to this, the application control unit 32b starts the recording process of recording the positional information on the communication terminal 30 that has been detected by the position detecting unit 32c, and starts the position recording process performed by the position recording application. Then, the application control unit 32b allows the receiving unit 32d to start the reception process of receiving the signal (tag signal) sent from the tag 10. Furthermore, the application control unit 32b allows the notifying unit 32e to start the notification process of notifying the server 40 of both the tag ID of the tag 10 included in the tag signal received from the tag 10 and the positional information on the communication terminal 30 obtained at the time of reception of the tag signal.

Subsequently, a case in which the accepting unit 32a has accepted an input of the second instruction information will be described. In this case, the application control unit 32b allows the position detecting unit 32c to end the detection process, and ends the recording process of recording the positional information that has been detected by the position detecting unit 32c. In addition to this, the application control unit 32b allows the receiving unit 32d to end the reception process, and allows the notifying unit 32e to end the notification process. In this way, the application control unit 32b performs control of linking the operation process performed by the position recording application with the operation process performed by the position search application.

The position detecting unit 32c performs the detection process of detecting the position of the communication terminal 30. The position detecting unit 32c has, for example, a GPS function. The position detecting unit 32c performs the detection process in accordance with the control performed by the application control unit 32b, so that the position detecting unit 32c performs the detection process of detecting the position of the communication terminal 30 only when the position recording application is operated.

The receiving unit 32d receives the tag signal sent from the tag 10 in accordance with the control performed by the application control unit 32b. When the receiving unit 32d is instructed by the application control unit 32b to start the reception process of receiving the tag signal, the receiving unit 32d starts the reception process of receiving the tag signal that has been sent from the tag 10. The receiving unit 32d performs the reception process in accordance with the control performed by the application control unit 32b, so that the receiving unit 32d performs the reception process only when the position recording application is operated. When the receiving unit 32d receives the signal from the tag 10 as a result of the distance between the tag 10 and the communication terminal 30 being decreased, the receiving unit 32d notifies the notifying unit 32e of the reception of the signal.

Moreover, in the case where the communication terminal 30 continuously accepts the tag ID of the search target, the receiving unit 32d may determine whether the tag ID included in the received tag signal agrees with the tag ID of the search target, and may notify the notifying unit 32e of the reception of the tag signal only when both the tag IDs agree with each other.

In the case where the ID that indicates, for example, the type of the signal is included in the tag signal sent from the tag 10, that is included in the received signal, the receiving unit 32d may determine the type of the tag signal on the basis of the ID. Furthermore, the receiving unit 32d may determine, as a method of determining the type of the received tag signal, the type of the tag signal on the basis of, for example, the number of tag signals that have been received from the same tag 10 within a certain period of time.

The notifying unit 32e performs the notification process of notifying, in accordance with the control performed by the application control unit 32b, the server 40 of both the tag ID of the tag signal and the positional information on the own communication terminal 30 at the time of reception of the tag signal in the case where the tag signal is received by the receiving unit 32d. The notifying unit 32e performs the notification process in accordance with the control performed by the application control unit 32b, so that the notifying unit 32e performs the notification process only when the position recording application is operated.

Furthermore, the notifying unit 32e may estimate the distance between the tag 10 and the own device in accordance with the type of the tag signal received by the receiving unit 32d, and may notify the server 40 of the information related to the position of the tag 10. Furthermore, the positional information is information that indicates the coordinates (latitude and longitude) of the own communication terminal 30 identified by using, for example, a GPS. Alternatively the positional information may be information that indicates a rough area that is identified by a base station connected by the own communication terminal 30.

### Configuration of server

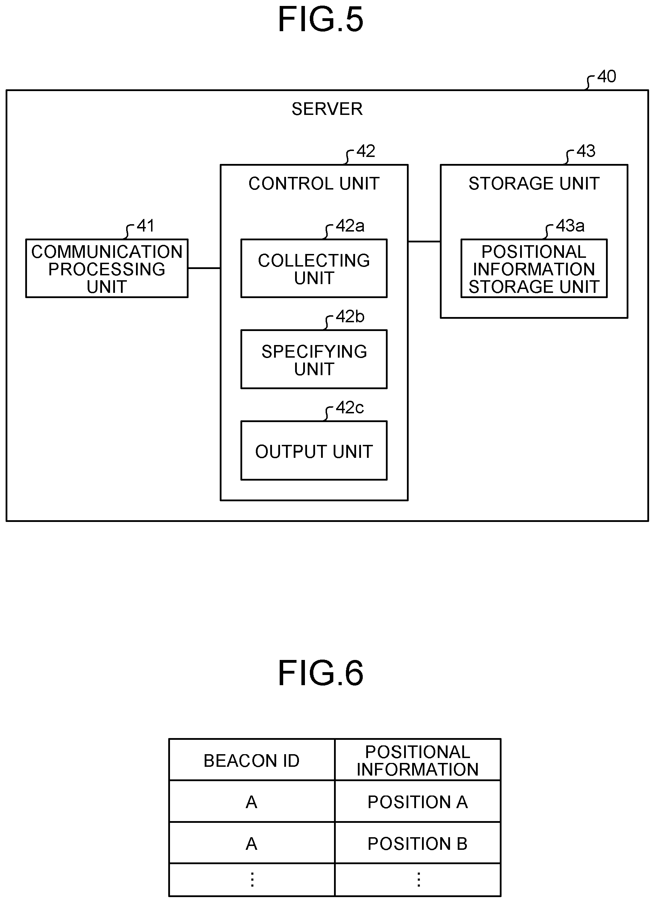

In the following, a configuration of the server 40 will be described with reference to FIG. 5. FIG. 5 is a block diagram illustrating an example of the configuration of the server according to the first embodiment. As illustrated in FIG. 5, the server 40 includes a communication processing unit 41, a control unit 42, and a storage unit 43. The processes performed by each of the units included in the server 40 will be described below. Furthermore, the configuration illustrated in FIG. 5 corresponds to a case in which the server 40 also has a function of receiving the tag ID of the tag 10 and the positional information on the tag 10 from the communication terminal 20, in addition to the communication terminal 30.

The communication processing unit 41 controls communication related to various kinds of information that are sent and received between the communication terminals 20 and 30 connected each other. For example, the communication processing unit 41 receives the tag ID of the tag 10 and the positional information on the tag 10 from each of the communication terminals 20 and 30.

Furthermore, the storage unit 43 stores therein data and programs that are needed for various kinds of processes performed by the control unit 42, and includes, in particular, as closely related to the present invention, a positional information storage unit 43a. For example, the storage unit 43 is a semiconductor memory device, such as a RAM or flash memory, or a storage device, such as a hard disk or an optical disk, or the like.

The positional information storage unit 43a stores therein information for searching for the position of the tag 10 collected from each of the communication terminals 20. For example, as illustrated in FIG. 6, the positional information storage unit 43a stores therein, in an associated manner, the "tag ID" for uniquely identifying the tag 10 and "positional information" that indicates the position of the communication terminal 20 obtained at the reception of the signal sent from the tag 10. FIG. 6 is a diagram illustrating one example of a table stored in the positional information storage unit.

To explain with an example illustrated in FIG. 6, for example, the positional information storage unit 43a stores therein, in an associated manner, a tag ID "A" and the positional information on a "position A". This means that each of the communication terminals 20 and 30 has received the signal sent by the tag 10 with the tag ID of "A" at the "position A". Furthermore, in the example illustrated in FIG. 6, a position A and a position B are simply illustrated as the positional information, but, in practice, it is assumed that a positional information storage unit 43b stores therein information for specifying, for example, longitude and latitude as the positional information.

The control unit 42 includes an internal memory for storing therein needed data and programs in which various kinds of processing procedures are prescribed, whereby the control unit 42 executes various kinds of processes, and includes, in particular, as closely related to the present invention, a collecting unit 42a, a specifying unit 42b, and an output unit 42c. Here, the control unit 42 is an electronic circuit, such as a CPU or an MPU, or an integrated circuit, such as an ASIC or a FPGA.

The collecting unit 42a collects the positional information from the plurality of communication terminals 20 and 30. For example, the collecting unit 42a collects positional information by transmitting a notification instruction to instruct each of the communication terminals 20 in each of which the position search application is activated and 30 in each of which the recording process is currently performed by the position recording application to send information as a notification at a predetermined time interval. Furthermore, the collecting unit 42a may transmit the notification instruction at a timing of a predetermined operation performed by the user, or, alternatively, instead of transmitting the notification instruction, the collecting unit 42a may collect the positional information by receiving the information that has been transmitted at each of the timings of the respective communication terminals 20 and 30.

The specifying unit 42b specifies the position of the tag 10 by using the pieces of positional information collected by the collecting unit 42a. For example, the specifying unit 42b specifies the position of the tag 10 by sequentially narrowing down the places of the tag 10 every time the positional information is collected by the collecting unit 42a.

The output unit 42c outputs the information related to the position of the tag 10 that has been specified by the specifying unit 42b. For example, the output unit 42c may display an image in which a circle indicating an estimated range of the presence of the tag 10 has been added to a map that corresponds to the position of the tag 10 specified by the specifying unit 42b.

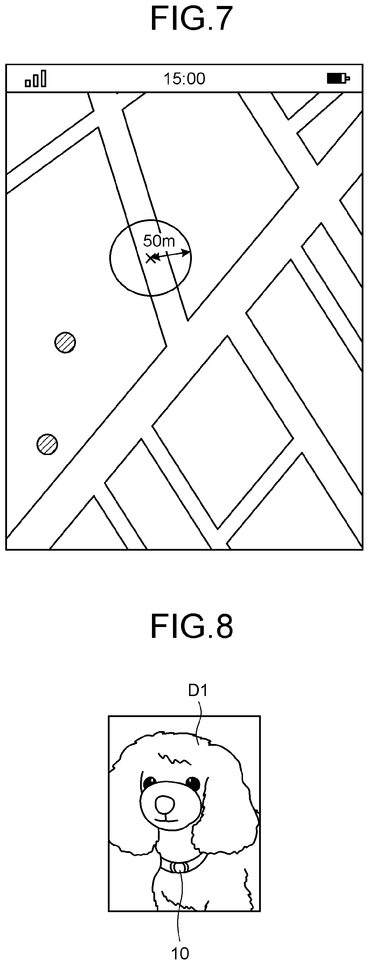

In the following, one example of a screen displayed on the communication terminal 20 will be described with reference to FIG. 7. FIG. 7 is a diagram illustrating one example of the screen displayed on the communication terminal 20. As illustrated in FIG. 7 as an example, for example, in the case where it is specified that the tag 10 is present within a radius of 50 m from a point indicated by "x" on the map, the server 40 displays an image, in which a circle with the size corresponding to a reduced scale of the map has been added, as the circle around the point of "x" with a radius of 50 m, at a place corresponding to the position of the tag 10 on the map.

Moreover, the output unit 42c outputs the information related to the position of the tag 10 to only the pet owner of the pet, the guardian of the child, and the communication terminal 20 belonging to the owner of the specific object attached to the tag 10. In other words, the server 40 outputs the position of the tag 10 to only the communication terminal 20 that is used by a specific user instead of outputting the position of the tag 10 to all of the communication terminals 20, so that the server 40 is able to prevent the personal information from being notified to unspecified persons.

### One example of position search process

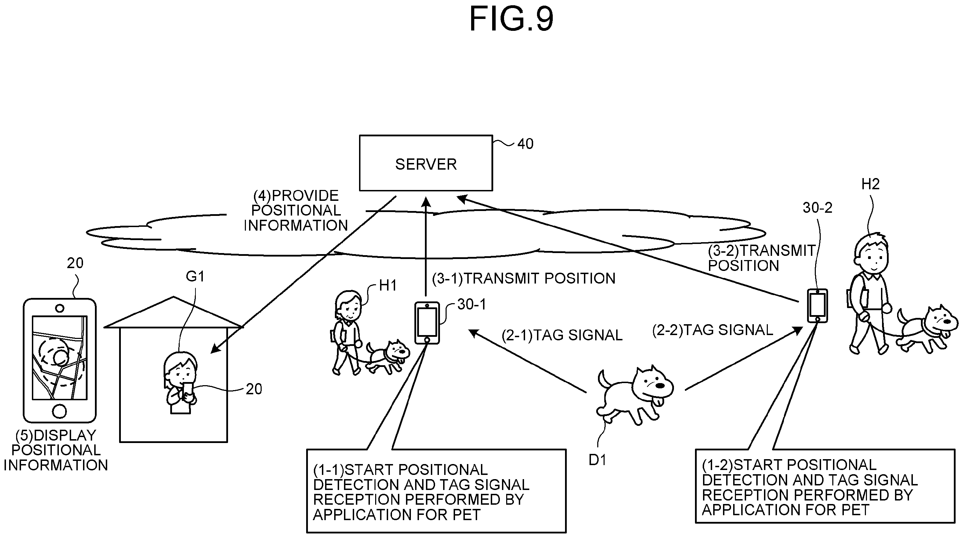

In the following, an application example of the position search system 1 will be described. FIG. 8 is a diagram illustrating an attachment target of the tag 10. FIG. 9 is a diagram illustrating the application example of the position search system. As illustrated in FIG. 8, the tag 10 is attached to, for example, a dog collar of a pet D1.

As illustrated in FIG. 9, each of search collaborators H1 and H2 serving as volunteers starts a walk application that is used for a pet and that has been downloaded into respective communication terminals 30-1 and 30-2 at the time of a start of walking of respective pets, and allows the respective communication terminals 30-1 and 30-2 to start position detection ((1-1) and (1-2) in FIG. 9) .

In the walk application, a function of the position search application for notifying, in the case where the tag signal sent from the tag 10 has been received, the server 40 of both the tag ID included in the tag signal and the positional information on the respective own communication terminals 30-1 and 30-2 is given. In the position search system 1, in response to the start of the position recording application, the reception process of receiving the tag signal and the communication process of notifying the server 40 of both the ID information sent from the tag 10 and the positional information on the mobile terminal corresponding to the communication terminal 30 are also started ((1-1) and (1-2) in FIG. 9).

When the pet D1 got lost, the tag signal is sent from the tag 10 that is attached to the pet D1 ((2-1) and (2-2) in FIG. 9). In this case, in the case where the search collaborators H1 and H2 are walking within a range of an output of the signal of the tag 10, the communication terminals 30-1 and 30-2 are able to receive the tag signal. If the communication terminals 30-1 and 30-2 receive the tag signal, the communication terminals 30-1 and 30-2 transmit the tag ID and the positional information on the communication terminals 30-1 and 30-2 obtained at the time of reception of the tag signal to the server 40 ((3-1) and (3-2) in FIG. 9).

The server 40 specifies the position of the tag 10 on the basis of the communication terminals 30-1 and 30-2, and provides the positional information on the pet D1 with the attached tag 10 to the communication terminal 20 carried by a pet owner G1 of the pet D1 ((4) in FIG. 9 ). As a result of this, the positional information on the pet D1 is displayed on the communication terminal 20 in the format of a map ((5) in FIG. 9).

### Position search process

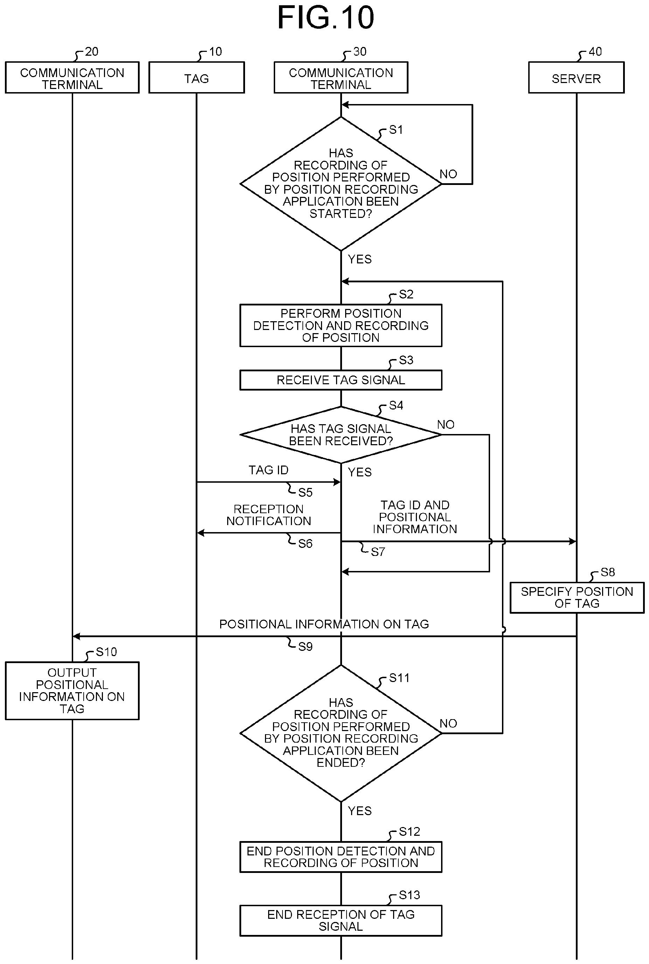

In the following, the flow of a series of processes performed in the position search system 1 will be described. FIG. 10 is a sequence diagram illustrating the processing procedure of a position search process according to the first embodiment.

As illustrated in FIG. 10, the communication terminal 30 determines whether to allow the position recording application to start recording of the position on the basis of whether or not the first instruction information has been input (Step S1). If the communication terminal 30 does not allow the position recording application to start the recording of the position (No at Step S1), the communication terminal 30 returns to the process at Step S1.

If the communication terminal 30 start the position record to be performed by the position recording application (Yes at Step S1), the communication terminal 30 performs the detection process of detecting the position of the communication terminal 30 and performs recording of the detected positional information (Step S2). Then, the communication terminal 30 performs the reception process of receiving the tag signal (Step S3).

Subsequently, the communication terminal 30 determines whether the communication terminal 30 has received the tag signal (Step S4). If the communication terminal 30 has received the tag signal (Yes at Step S4) as a result of reception of the tag signal including the tag ID sent from the tag 10 (Step S5), the communication terminal 30 transmits a receipt notification indicating that the tag signal has been received to the tag 10 that is the sending source of the tag signal (Step S6). Then, the communication terminal 30 notifies the server 40 the server 40 of the positional information on the own communication terminal 30 together with the tag ID of the tag 10 (Step S7) .

The server 40 specifies the position of the tag 10 on the basis of the notification received from the communication terminal 30 (Step S8). The server 40 transmits the information related to the specified position of the tag 10 to the communication terminal 20 (Step S9), and allows the communication terminal 20 to output the information related to the position of the tag 10 (Step S10) .

If the communication terminal 30 does not receive the tag signal (No at Step S4) or after the process at Step S7, the communication terminal 30 determines whether to end the position record performed by the position recording application on the basis whether or not the second instruction information has been received (Step S11). If the communication terminal 30 does not end the position record performed by the position recording application (No at Step S11), the communication terminal 30 returns to the step at Step S2.

If the communication terminal 30 ends the position record performed by the position recording application (Yes at Step S11), the communication terminal 30 ends the detection process of detecting the position of the communication terminal 30 and the recording of the detected positional information (Step S12). Then, the communication terminal 30 ends the reception process of receiving the tag signal (Step S13).

### Effects of the first embodiment

As described above, in the first embodiment, if the possessor (search collaborator) of the communication terminal 30 operates a start button or the like of the position recording application when the possessor goes out of doors, the communication terminal 30 starts the reception process of receiving the tag ID performed by the position search application and the notification process of notifying of both the tag ID and the positional information. In this way, in the communication terminal 30, as a result of the position recording application being started when the possessor goes out of doors, the reception process of receiving the tag ID performed by the position search application and the notification process of notifying of both the tag ID and the positional information are automatically started. As a result of this, the search collaborator who is the possessor of the communication terminal 30 does not need to activate the position search application in order to search for the position of the tag 10.

Then, if the possessor of the communication terminal 30 operates the end button or the like of the position recording application when the possessor finished going out, the communication terminal 30 ends the reception process of receiving the tag ID performed by the position search application and the notification process of notifying of the tag ID and the positional information. In this way, in the communication terminal 30, as a result of the position recording application being ended due to the end of the going out, the reception process of receiving the tag ID performed by the position search application and the notification process of notifying of both the tag ID and the positional information are automatically ended. As a result of this, the search collaborator who is the possessor of the communication terminal 30 does not need to close down the position search application in order to end the search for the position of the tag 10.

In this way, in the first embodiment, the possessor of the communication terminal 30 does not need to perform an activation operation or an end operation of the position search application every time the possessor goes out of doors. In the first embodiment, the function of the position search application is automatically started up in the communication terminal of the possessor only by an operation of the position recording application performed by the possessor when the possessor goes out of doors. Therefore, according to the first embodiment, it is possible to increase the number of communication terminals 30 for finding the tag 10 included in the town without increasing the load applied to the search collaborator who is the possessor of the communication terminal 30, and it is possible to improve the probability of finding the tag 10.

### Modification of the first embodiment

In the first embodiment, a case has been described as an example in which the position recording application is linked with the position search application that is provided by the position search system 1, but the application corresponding to the linking target may be an application other than the position recording application.

Conventionally, an application for measuring and recording the number of steps, calories burned, the intensity of activity, or the like at the time of going out by using a function of an acceleration sensor installed in the communication terminal is also provided (hereinafter, also referred to as an activity amount measurement application). It is possible to link both the activity amount measurement application and the position search application that is provided by the position search system 1 each other. Furthermore, the activity amount measurement application may also be an application for measuring, a metabolic expenditure, a heart rate, oxygen content in blood, or the like, in addition to the number of steps, the intensity of activity, and calories burned.

In order to grasp the number of steps at the time of walking when the possessor goes out of doors or the level of the intensity of activity at the time of walking, when the possessor operates the start button or the like of the activity amount measurement application, the activity amount measurement application calculates the cumulative total of the number of steps or the intensity of activity from the acceleration sensor or the like on the basis of the time point of the operation as the starting point. When the calculation of the cumulative total of the number of steps or the intensity of activity is to be ended, as the possessor operating the end button or the like of the activity amount measurement application, the activity amount measurement application ends the cumulative total of the number of steps or the intensity of activity performed on the basis of the operation of the start button or the like of the application as the starting point.

Furthermore, there is also an activity amount measurement application that is always on. Furthermore, there is also an activity amount measurement application that calculates a cumulative total based on certain time of day (for example, at twelve midnight) as the starting point of the measurement. In the present modification, a description will be given as an example in which the activity amount measurement application starts measurement of the cumulative total of the number of steps or the intensity of activity on the basis of the case where the possessor operates the start button or the like at the beginning of going out as the starting point, and ends the measurement of the cumulative total of the number of steps or the intensity of activity by operating the end button or the like when the possessor finished going out.

First, in the position search system according to the modification of the first embodiment, a function of notifying, via a network, the server 40 in the position search system of both the tag ID that is included in the signal when the signal sent from the tag 10 is received and the positional information on the own communication terminal is given to the activity amount measurement application that is installed in the communication terminal 30 used by the possessor.

Then, in the modification according to the first embodiment, when the activity amount measurement application starts measurement of the cumulative total of the number of steps or the amount of activity, the communication terminal 30 that functions as a sensor in a town allows the activity amount measurement application to measure the positional information on the own communication terminal, and also operates the function of notifying the server 40 of both the ID information sent from the tag and the positional information on the own communication terminal. In other words, in the case where the possessor (search collaborator) of the communication terminal 30 operates the start button or the like of the activity amount measurement application when the possessor goes out of doors, the communication terminal 30 automatically starts the position detection process of detecting the position of the own communication terminal 30, the reception process of receiving the tag ID, and the notification process of notifying of the tag ID and the positional information.

Then, in the modification according to the first embodiment, when the activity amount measurement application ends the calculation of the cumulative total of the number of steps or the amount of activity, the communication terminal 30 that functions as a sensor in a town allows the activity amount measurement application to end the function of notifying of both the ID information received from the tag and the positional information on the mobile terminal of the terminal. In the case where the possessor (search collaborator) of the communication terminal operates the end button or the like of the activity amount measurement application when the possessor finished going out, the communication terminal automatically ends the tag ID reception process and the notification process of notifying of both the tag ID and the positional information performed by the activity amount measurement application.

In the modification according to the first embodiment, the accepting unit 32a included in the communication terminal 30 accepts an input of the first instruction information that instructs the activity amount measurement application to start the cumulative total calculation of the amount of activity as instructed by the possessor of the communication terminal 30, and accepts an input of the second instruction information that instructs the activity amount measurement application to end the cumulative total calculation as instructed by the possessor of the communication terminal 30.

In the modification according to the first embodiment, in the case where the accepting unit 32a accepts an input of the first instruction information, the application control unit 32b included in the communication terminal 30 allows the position detecting unit 32c to start the detection process. The application control unit 32b starts the measurement process of measuring the positional information that has been detected by the position detecting unit 32c. The application control unit 32b allows the receiving unit 32d to start the reception process and allows the notifying unit 32e to start the notification process.

In the case where the accepting unit 32a accepts an input of the second instruction information, the application control unit 32b allows the position detecting unit 32c to end the detection process, and ends the measurement process of measuring the positional information that has been detected by the position detecting unit 32c. In addition to this, the application control unit 32b allows the receiving unit 32d to end the reception process, and allows the notifying unit 32e to end the notification process.

### Position search process

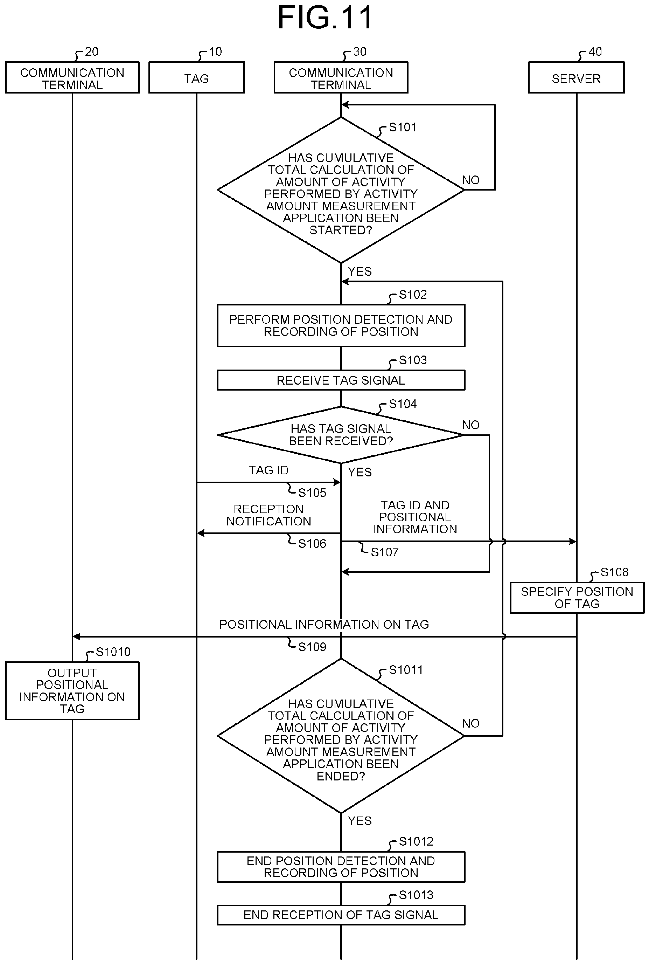

In the following, the flow of a series of processes performed in a first modification according to the first embodiment will be described. FIG. 11 is a sequence diagram illustrating a processing procedure of the position search process according to the first modification of the first embodiment.

As illustrated in FIG. 10, the communication terminal 30 determines whether to allow the activity amount measurement application to start the cumulative total calculation of the amount of activity on the basis of whether or not the first instruction information has been input (Step S101). If the communication terminal 30 does not allow the activity amount measurement application to start the cumulative total calculation of the amount of activity (No at Step S101), the communication terminal 30 returns to the process at Step S101.

If the communication terminal 30 allows the activity amount measurement application to start the cumulative total calculation of the amount of activity (Yes at Step S101), the communication terminal 30 performs the detection process of detecting the position of the communication terminal 30 and performs recording of the detected positional information (Step S102). Then, the communication terminal 30 performs the reception process of receiving the tag signal (Step S103).

Subsequently, the communication terminal 30 determines whether the communication terminal 30 has received the tag signal (Step S104). If the communication terminal 30 has received the tag signal (Yes at Step S104) as a result of reception of the tag signal including the tag ID sent from the tag 10 (Step S105), the communication terminal 30 transmits a receipt notification indicating that the tag signal has been received to the tag 10 that is the sending source of the tag signal (Step S106). Then, the communication terminal 30 notifies the server 40 the server 40 of the positional information of the own communication terminal 30 together with the tag ID of the tag 10 (Step S107).

The server 40 specifies the position of the tag 10 on the basis of the notification performed by the communication terminal 30 (Step S108). The server 40 transmits the information related to the specified position of the tag 10 to the communication terminal 20 (Step S109), and allows the communication terminal 20 to output the information related to the position of the tag 10 (Step S1010) .

If the communication terminal 30 does not receive the tag signal (No at Step S104) or after the process at Step S107, the communication terminal 30 determines whether to end the cumulative total calculation of the amount of activity with respect to the activity amount measurement application on the basis whether or not the second instruction information has been input (Step S1011). If the communication terminal 30 does not end the cumulative total calculation of the amount of activity with respect to the activity amount measurement application (No at Step S1011), the communication terminal 30 returns to the process at Step S102.

If the communication terminal 30 ends the cumulative total calculation of the amount of activity with respect to the activity amount measurement application (Yes at Step S1011), the communication terminal 30 ends the detection process of detecting the position of the communication terminal 30 and the recording of the detected positional information (Step S1012). Then, the communication terminal 30 ends the reception process of receiving the tag signal (Step S1013).

### Second Embodiment

In a second embodiment, a case in which a function of determining whether the possessor goes out of doors or returns home is given to the communication terminal, a start and an end of the position search application is automatically controlled in accordance with at the timing at which the possessor goes out of doors or returns home will be described.

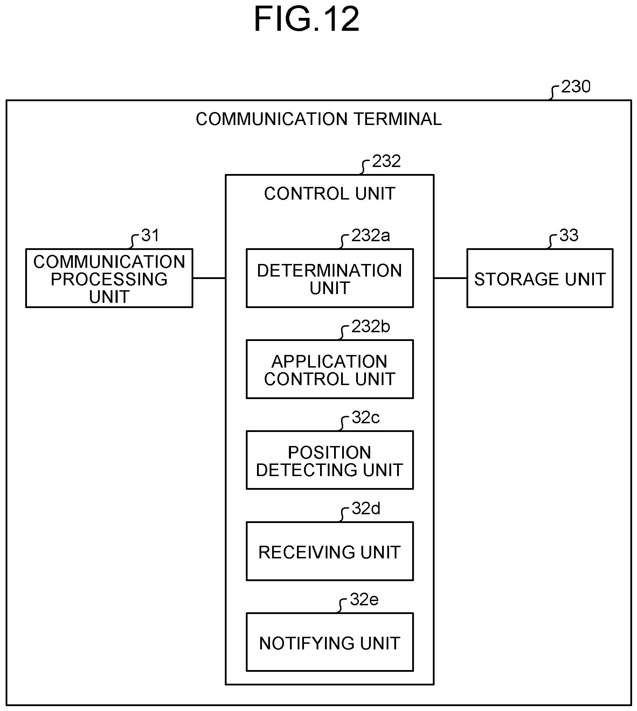

FIG. 12 is a block diagram illustrating a configuration example of a communication terminal according to the second embodiment. A position search system according to the second embodiment includes a communication terminal 230 illustrated in FIG. 12 instead of the communication terminal 30 illustrated in FIG. 1. A search collaborator, such as a volunteer, in a town of a volunteer includes the communication terminal 230.

The communication terminal 230 includes a control unit 232 instead of the control unit 32 illustrated in FIG. 4. The control unit 232 includes a determination unit 232a, an application control unit 232b (control unit), the position detecting unit 32c, the receiving unit 32d, and the notifying unit 32e.

The determination unit 232a determines whether the search collaborator who is the possessor of the communication terminal 230 goes out of doors on the basis of the detection result that has been obtained by the position detecting unit 32c or a movement detection result that has been obtained by a movement detection function included in the communication terminal 30 (for example, an acceleration sensor or the like included in the communication terminal 230). The movement detection result includes, in addition to the positional information that has been detected by the position detecting unit 32c, the number of steps of the possessor counted by the result obtained by a sensor, such as an acceleration sensor, and the like.

For example, the determination unit 232a acquires an address of the own house of the possessor of the communication terminal 230, an address of the place of work, or an address of the movement destination that has been registered in schedule. Then, In the case where the determination unit 232a has detected a movement by an amount equal to or larger than a predetermined distance from the acquired address (for example, 10 m or more), the determination unit 232a determines that the possessor of the communication terminal 230 went out of doors. Then, in the case where the communication terminal 230 is located within the predetermined distance (for example, 10 m) with respect to the acquired address, the determination unit 232a determines that the possessor of the communication terminal 230 finished going out.

In the case where it is determined, by the determination unit 232a, that the possessor of the communication terminal 30 went out of doors, the application control unit 32b allows the receiving unit 32d to start the reception process, and allows the notifying unit 32e to start the notification process. In the case where it is determined, by the determination unit 232a, the possessor of the communication terminal 30 finished going out, the application control unit 232b allows the receiving unit 32d to end the reception process, and allows the notifying unit 32e to end the notification process.

### Position search process

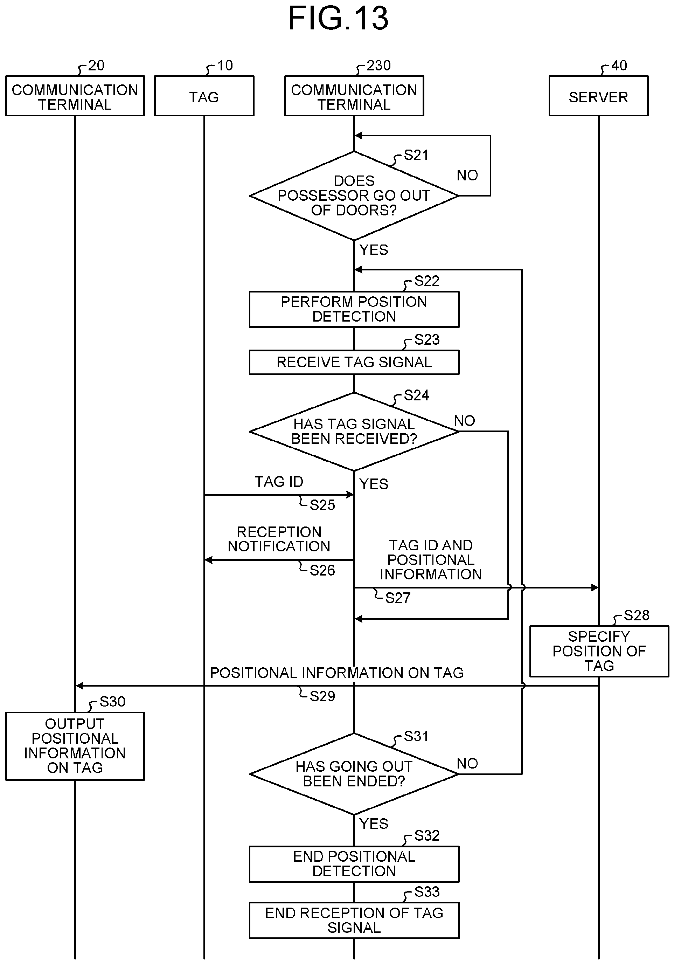

In the following, the flow of a series of processes performed in the position search system according to the second embodiment will be described. FIG. 13 is a sequence diagram illustrating the processing procedure of the position search process according to the second embodiment.

As illustrated in FIG. 13, the communication terminal 230 determines whether or not the possessor of the communication terminal 230 went out of doors on the basis of the position detection result or the movement detection result of detecting the movement of the communication terminal 230 (Step S21). If the possessor of the communication terminal 230 does not go out of doors (No at Step S21), the communication terminal 30 returns to the process at Step S21.

If the possessor of the communication terminal 230 went out (Yes at Step S21), the communication terminal 230 performs the detection process of detecting the position of the communication terminal 230 (Step S22). Then, the communication terminal 230 performs the reception process of receiving the tag signal (Step S23). The processes performed at Step S24 to Step S30 illustrated in FIG. 13 are the same as the processes performed at Step S4 to Step S10 illustrated in FIG. 10.

If the communication terminal 230 does not receive the tag signal (No at Step S24) or after the process at Step S27, the communication terminal 230 determines whether the possessor of the communication terminal 230 finished going out (Step S31). If the communication terminal 230 determines that possessor of the communication terminal 230 is going out (No at Step S31), the communication terminal 230 returns to the process at Step S22.

If the communication terminal 230 determines that the possessor of the communication terminal 230 finished going out (Yes at Step S31), the communication terminal 230 ends the detection process of detecting the position of the communication terminal 230 (Step S32). Then, the communication terminal 230 ends the reception process of receiving the tag signal (Step S33).

### Effects of the second embodiment

In the second embodiment, the communication terminal 230 determines whether or not the possessor of the communication terminal 230 of the possessor of the communication terminal 230 goes out of doors, the communication terminal 230 automatically starts and ends tag signal reception process and the notification process of both the tag ID and the positional information in accordance with the going out performed by the possessor. Therefore, in the second embodiment, it is possible to increase the number of communication terminals 230 that are provided in the town and that find the tag 10 while further reducing the load exerted on the search collaborator who is the possessor of each of the communication terminals 230, and it is thus possible to improve the probability of finding the tag 10.

Furthermore, the embodiment is not limited to the first and the second embodiments, as long as the communication terminals 30 and 230 are able to perform control of allowing the receiving unit 32d to start and end the reception process and allowing the notifying unit 32e to start and end the notification process by linking the detection process of detecting the position of each of the communication terminals 30 and 230 when the possessors of the communication terminals 30 and 230 go out of doors.

### System configuration, etc.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions. In addition, all or any part of each of the processing functions performed by the each of the devices can be implemented by a CPU and by programs analyzed and executed by the CPU or implemented as hardware by wired logic.

Furthermore, of the processes described in the embodiment, the whole or a part of the processes that are mentioned as being automatically performed can also be manually performed, or the whole or a part of the processes that are mentioned as being manually performed can also be automatically performed using known methods. Furthermore, the flow of the processes, the control procedures, the specific names, and the information containing various kinds of data or parameters indicated in the above specification and drawings can be arbitrarily changed unless otherwise stated.

### Program

Furthermore, it is possible to generate a program in which a process to be executed by each of the communication terminals 20, 30, and 230 and the server 40 described above in the embodiments is described in a computer executable language. For example, it is possible to generate a position search program in which the processes performed by the communication terminals 20, 30, and 230 and the server 40 according to the embodiments are described in a computer executable language. In this case, it is possible to obtain the same effects as those described above in the embodiments by the computer executing the position search program. In addition, it may be possible to implement the same processes as those described above in the embodiments by recording the position search program into a computer readable recording medium and allow the computer to read the position search program recorded in the recording medium.

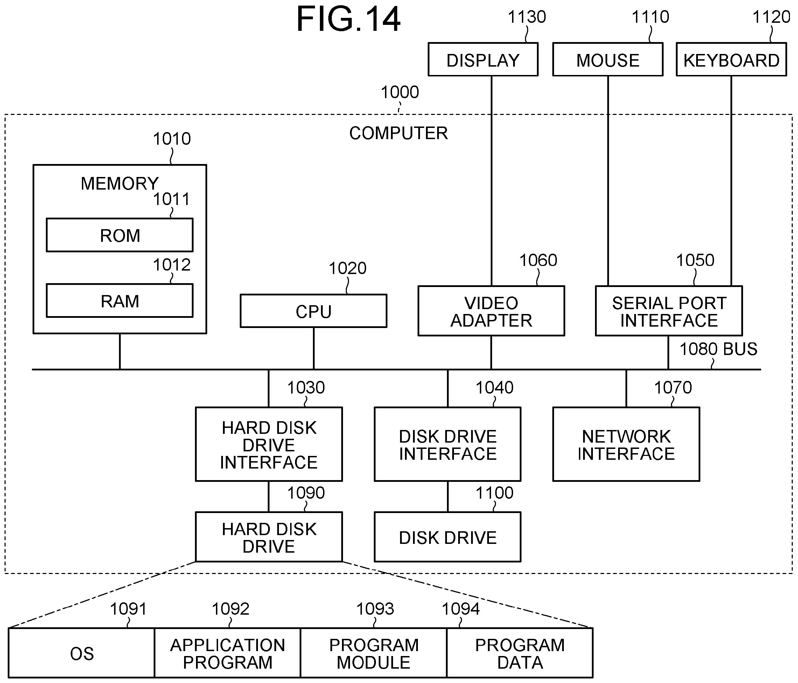

FIG. 14 is a diagram illustrating a computer that executes the position search program. As illustrated in FIG. 14, a computer 1000 includes, for example, a memory 1010, a central processing unit (CPU) 1020, a hard disk drive interface 1030, a disk drive interface 1040, a serial port interface 1050, a video adapter 1060, and a network interface 1070, and each of the units is connected by a bus 1080.

The memory 1010 includes, as illustrated as an example in FIG. 14, a read only memory (ROM) 1011 and a RAM 1012. The ROM 1011 stores therein, for example, a boot program, such as a basic input output system (BIOS). The hard disk drive interface 1030 is connected to a hard disk drive 1090 as illustrated as an example in FIG. 14. The disk drive interface 1040 is connected to a disk drive 1100 as illustrated as an example in FIG. 14. For example, a detachable storage medium, such as a magnetic disk or an optical disk, is inserted into the disk drive 1100. The serial port interface 1050 is connected to, as illustrated as an example in FIG. 14, for example, a mouse 1110 and a keyboard 1120. The video adapter 1060 is connected to, as illustrated as an example in FIG. 14, for example, a display 1130.

Here, as illustrated as an example in FIG. 14, the hard disk drive 1090 stores therein, for example, an OS 1091, an application program 1092, a program module 1093, and program data 1094. In other words, the above described position search program is stored, as a program module in which commands executed by the computer 1000 are described, in, for example, the hard disk drive 1090.

Furthermore, various kinds of data described above in the embodiments are stored in, as the program data, for example, the memory 1010 or the hard disk drive 1090. Then, the CPU 1020 reads the program module 1093 or the program data 1094 stored in the memory 1010 or the hard disk drive 1090 as needed into the RAM 1012 and executes various kinds of processing procedures.

Moreover, the program module 1093 or the program data 1094 according to the position search program may be stored in, for example, a detachable storage medium as well as being stored in the hard disk drive 1090, and then may be read out by the CPU 1020 via the disk drive or the like. Alternatively, the program module 1093 or the program data 1094 according to the position search program may be stored in another computer that is connected via a network (a local area network (LAN), a wide area network (WAN), etc.), and then may be read out by the CPU 1020 via the network interface 1070.

The above described embodiments and modifications of each of the embodiments are included in the technology disclosed in the present application and are also included in the invention described in the accompanying claims and their equivalents.

### [Explanation of Reference]

1 position search system
10 tag
11 sending unit
20, 30, 230 communication terminal
21, 31 communication processing unit
22, 32, 232 control unit
22a, 32a accepting unit
22b, 32d receiving unit
22c, 32e notifying unit
23, 33 storage unit
32b ,232b application control unit
40 server
42a collecting unit
42b specifying unit
42c output unit
232a determination unit

## Claims

1. A position search system comprising:
a tag that sends a tag signal including identification information;
a first communication terminal that receives the tag signal;
a server that collects pieces of information from the first communication terminal that has received the tag signal; and
a second communication terminal that acquires positional information on the tag transmitted from the server, wherein
the first communication terminal includes
a detecting unit configured to perform a detection process of detecting a position of the first communication terminal when a possessor of the first communication terminal goes out of doors,
a receiving unit configured to perform a reception process of receiving the tag signal that has been sent from the tag,
a notifying unit configured to perform a notification process of notifying the server of both identification information on the tag included in the tag signal received from the tag and positional information on the first communication terminal obtained when the tag signal has been received, and
a control unit configured to allow the receiving unit to start the reception process and allow the notifying unit to start the notification process when the detection process performed by the detecting unit is started, and allow the receiving unit to end the reception process and allow the notifying unit to end the notification process when the detection process performed by the detecting unit is ended, and
the server includes
a collecting unit configured to collect the identification information on the tag and the positional information on the tag from the first communication terminal,
a specifying unit configured to specify a position of the tag by using the positional information collected by the collecting unit, and
an output unit configured to output information related to the position of the tag specified by the specifying unit.

2. The position search system according to claim 1, wherein
the first communication terminal allows the detecting unit to perform the detection process, and in which a position recording application for recording the positional information that has been detected by the detecting unit is installed, wherein the first communication terminal further includes
an accepting unit configured to accept an input of first instruction information that instructs the position recording application to start recording of the positional information as instructed by the possessor of the first communication terminal and an input of second instruction information that instructs the position recording application to end the recording of the positional information as instructed by the possessor of the first communication terminal, wherein
when the accepting unit accepts the input of the first instruction information, the control unit allows the detecting unit to start the detection process, starts a recording process of recording the positional information that has been detected by the detecting unit, allows the receiving unit to start the reception process, and allows the notifying unit to start the notification process, and
when the accepting unit accepts the input of the second instruction information, the control unit allows the detecting unit to end the detection process, ends the recording process of recording the positional information that has been detected by the detecting unit, allows the receiving unit to end the reception process, and allows the notifying unit to end the notification process.

3. The position search system according to claim 2, wherein the accepting unit accepts the input of each of the first instruction information and the second instruction information by way of a wearable device worn by the possessor of the first communication terminal.

4. The position search system according to claim 2 or 3, wherein the position recording application is an application for recording, based on the positional information that is periodically detected by the detecting unit, a movement route of the first communication terminal as a walking route or a running route of the possessor of the first communication terminal.

5. The position search system according to claim 1, further including
a determination unit configured to determine whether or not the possessor of the first communication terminal goes out of doors based on a detection result obtained by the detecting unit or a movement detection result obtained by a movement detection function provided in the first communication terminal, wherein
when it is determined by the determination unit that the possessor of the first communication terminal went out of doors, the control unit allows the receiving unit to start the reception process and allows the notifying unit to start the notification process, and
when it is determined by the determination unit that the possessor of the first communication terminal finished going out, the control unit allows the receiving unit to end the reception process and allows the notifying unit to end the notification process.

6. The position search system according to claim 1, wherein
an activity amount measurement application for measuring an amount of activity is installed in the first communication terminal, wherein the first communication terminal further includes
an accepting unit configured to accept an input of first instruction information that instructs the activity amount measurement application to start cumulative total calculation of the amount of activity as instructed by the possessor of the first communication terminal and an input of second instruction information that instructs the activity amount measurement application to end the cumulative total calculation as instructed by the possessor of the first communication terminal, wherein
when the accepting unit accepts the input of the first instruction information, the control unit allows the detecting unit to start the detection process, starts a measurement process of measuring the positional information that has been detected by the detecting unit, allows the receiving unit to start the reception process, and allows the notifying unit to start the notification process, and
when the accepting unit accepts the input of the second instruction information, the control unit allows the detecting unit to end the detection process, ends the measurement process of measuring the positional information that has been detected by the detecting unit, allows the receiving unit to end the reception process, and allows the notifying unit to end the notification process.

7. A position search method performed by a position search system including a tag that sends a tag signal including identification information, a first communication terminal that receives the tag signal, a server that collects pieces of information from the first communication terminal that has received the tag signal, and a second communication terminal that acquires positional information on the tag transmitted from the server, the position search method comprising:
a step of performing, by the first communication terminal, a detection process of detecting a position of the first communication terminal when a possessor of the first communication terminal goes out of doors;
a step of performing, by the first communication terminal, a reception process of receiving the tag signal that has been sent from the tag;
a step of performing, by the first communication terminal, a notification process of notifying the server of both identification information on the tag included in the tag signal received from the tag and positional information on the first communication terminal obtained when the tag signal has been received;
a step of allowing the reception process to be started and the notification process to be started when the detection process is started, and a step of allowing the reception process to be ended and the notification process to be ended when the detection process is ended;
a step of collecting, by the server, the identification information on the tag and the positional information on the tag from the first communication terminal;
a step of specifying, by the server, a position of the tag by using the positional information collected at the step of the collecting; and
a step of outputting information related to the position of the tag specified at the step of the specifying.
